# EUROPEAN PATENT SPECIFICATION

(11) **EP 3 307 498 B1**
(45) Date of publication and mention of the grant of the patent: **30.09.2020**
(21) Application number: 16806944.1
(22) Date of filing: 31.05.2016
(51) Int. Cl.: C10L 11/04, C10L 11/06, C10L 11/08, C10L 5/44, C10L 5/36, B27L 7/06, B26D 1/09, B27L 7/00

(54) **A SPLITTING AND CHIPPING TOOL**
SPALT- UND ZERSPANUNGSWERKZEUG
OUTIL DE FENDAGE ET D'ÉCAILLAGE

(30) Priority: 09.06.2015 FI 20155438
(43) Date of publication of application: 18.04.2018
(73) Proprietor: Esmocon Oy, 40800 Vaajakoski (FI)
(72) Inventor: NÄRHI, Erkki, 40800 Vaajakoski (FI)
(74) Representative: Kolster Oy Ab
(86) International application number: PCT/FI2016/050382
(87) International publication number: WO 2016/198737

(56) References cited:
- EP-A1- 2 687 579
- EP-A2- 1 724 075
- WO-A1-2008/036028
- DE-U1- 20 302 874
- US-A- 199 184
- US-A- 203 535
- US-A- 694 027
- US-A- 4 220 185
- US-A- 5 983 967

## Description

The invention relates to a method for machining a piece by a multiple blade tool. The invention also relates to a chipping tool according to the preamble of claim 1. An example of a known chipping tool is described in document GB 915249.

In recent years, there has been more and more consideration of flue gas emissions of small fireplaces and the regulations on their use are more restricted. Uncontrolled and high flue gas emissions are harmful to the environment as they deteriorate the quality of breathing air. They also incur financial losses to the users of fireplaces due to their diminished energy efficiency. From the viewpoint of flue gas emissions, the most critical moment is usually the firing phase of a small fireplace.

According to studies, wood to be burned in a small fireplace should be piled in the fire chamber most preferably horizontally and an adequate quantity of suitable kindlings should be set on top of the wood pile. The kindlings should be of good quality, dry and clean. Commonly used kindlings are wooden chips and splinters, birch bark, paper, board and special lighter pieces and fluids. Many fireplace manufacturers do not recommend the burning of coated paper and board packages or some plastic grades in their fireplaces and particularly their use as kindlings. In most cases, it would be the safest to use only clean wood or its bark as the kindlings and fuel in a fireplace. The wooden kindlings should be thin enough splinters or chips and they should be set suitably densely. Wooden chips carved of a piece of wood and left fast at their one end represent such a kindling type.

Most preferably, the wood batch to be burned should be fired from its top part, whereby the wood material gasifiable from the heat of the kindlings can be burned more accurately. If the wood batch to be burned is fired from its bottom part, the flames of the kindlings often heat up too large a quantity of the top wood batch, whereby there is not enough time for most of the gasified wood to burn in the fire chamber. The incombustible gas mixture exits the fire chamber as such to the chimney stack and is usually visible as dark smoke which also smells strongly. This incomplete burning of flue gas mixture causes, inter alia, increased carbon monoxide (CO), hydrocarbon (HC) and fine particle emissions and creates also other compounds detrimental to health.

A disadvantage in the recently known carving methods of wooden kindling chips by a knife, an axe or some other hand tool is the laboriousness and slowness of manual labour particularly when manufacturing larger kindling batches. Usually, the amount of kindling chips carved or cut by hand is only the quantity required for firing one fireplace. Carving by hand is not an economic way to manufacture kindlings in larger quantities in the scale of serial production. Carving with a knife requires accurateness and good knife handling skills of the knife user. The knife must be suitable for carving and sufficiently sharp. When carving kindling chips by hand, the piece of wood must be of suitable shape and size. Of too thick wood, it is difficult to carve thin and long kindling chips. Too thin a piece of wood again breaks easily when carving with a knife. The wood fibre structure must be sufficiently straight and branchless in order to be able to work long and thin chips by a knife. In carving performed by hand, there is an accident risk of a possible injury to the carver by a slipping knife. The blade of the knife can also easily be damaged if the knife slips away from the wood piece being supported e.g. against a hard floor or a fireplace plane. An uncontrolled slip of the knife can often cause the splitting of the piece of wood particularly when hand-carving the last chips. When carving kindlings from chopped firewood by an axe, the chips being worked are often too thick to act as kindling chips as such. Such carving work also requires good axe handling skills and carefulness of the axe user due to the risk of accidents.

The object of the invention is to introduce a method for machining a piece and a chipping tool by means of which the above disadvantages are eliminated. A particular object of the invention is to disclose a method for machining a piece and a chipping tool which enable the chipping of a machinable piece effectively and the industrial production of a kindling surface of firewood. Furthermore, an object of the invention is to introduce a method and a chipping tool which can treat the surface of firewood such that it intensifies the firing characteristics of firewood. An additional object of the invention is to introduce a method and a chipping tool which can combine chopped firewood used as fuel and kindling chips in the same piece cost-effectively and with quality in the scale of serial production.

The method and the chipping tool according to the invention are characterised by what is presented in the claims.

The inventive idea behind the method and the chipping tool according to the invention is that a piece is machined by a tool which includes several chipping blades one after the other in the direction of the machining motion. Furthermore, the inventive idea is that the machinable piece and the chipping blades are pressed against each other by sufficient pressing force and either the piece or the tool or both are moved in relation to each other to provide a mutual feeding motion. The type of this feeding motion can be linear, rotating, curved or their combination. In the method, the length of the mutual feeding motion of the machinable piece and the tool is adjusted such that the machined chips remain fast at their one end on the machinable piece.

The feeding motion between the piece and the tool is controllable for a desired length. The number of chipping blades is typically 2-20 pieces. Typically, the thickness of chips is selectable between 0.01-10 mm by adjusting the chipping height of the blades. The width of the chips can vary between 1-100 mm. The mutual distance of the chips from each other is selectable in the range of 1-50 mm by adjusting the mutual position of the blades of the tool. The cross-sectional shape of the chips is selectable between e.g. an even rectangle, a wedge-shaped polygon, a grooved profile etc. by modifying the shape of the blades and by adjusting their position.

The method and the chipping tool according to the invention provide considerable advantages compared with recently known (traditional) manufacturing methods of firewood (kindlings) and chipping tools. The method according to the invention enables the effective serial production of thin material chips e.g. for improving the firing characteristics of firewood. The tool according to the invention enables machining several (2-20 pieces) chips, the common length of which is typically 0.1-10 m, from a piece by one feeding motion.

The firing characteristics of firewood machined by the method and the tool according to the invention are more improved than those of traditionally manufactured firewood. The invented method enables the combining of kindling chips and wood material functioning as fuel into one piece in the scale of serial production. When using firewood machined such, there is always a required amount of kindlings available combined with burnable chopped firewood. It is easier to fire pieces of firewood set in the fire chamber e.g. from the top because these machined pieces of chopped firewood provided with kindlings can be piled up in a suitable arrangement effortlessly. The machined kindling chips can replace traditional kindlings burning with more impurities, such as e.g. birch bark. Particularly cleanly firing firewood is provided by machining kindling chips e.g. to bark-free chopped firewood split from the interior part of the trunk. When wishing to intensify the drying of firewood, the kindling chips can be machined by the invented method also on the barked outer surface of the wood. Then, opening the wood bark and the surfaces of the machined chips increase the water evaporation area inside the wood substantially.

Next, the invention will be described in more detail with reference to the accompanying drawings in which
Fig. 1 shows the operating principle of a chipping method,
Fig. 2 shows the structural principle of a multiple blade chipping tool
Fig. 3 shows the structural principle of a multiple blade chipping tool according to the invention in which the chipping tool is combined with a splitting blade.

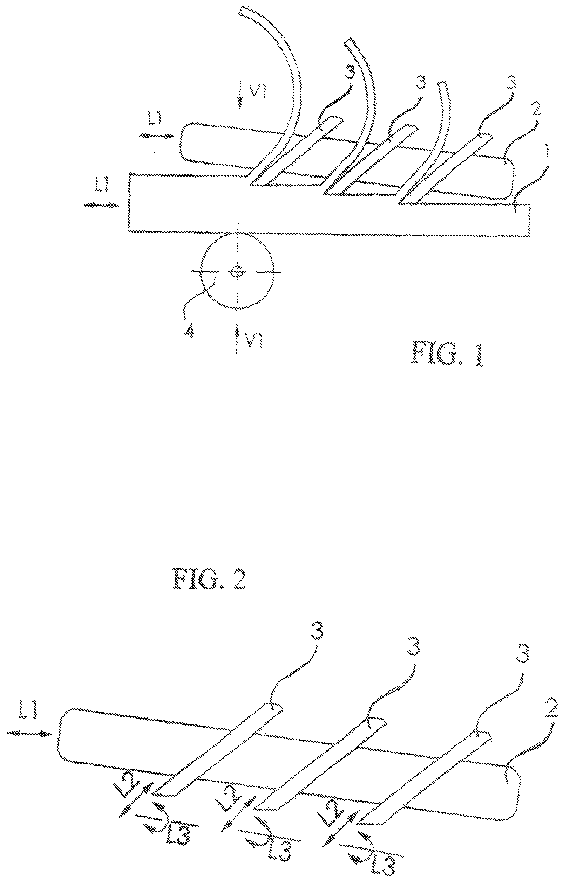

In the method in accordance with Fig. 1, a machinable piece 1 and chipping blades 3 are pressed in the first work phase against each other by sufficient pressing force VI. The pressing force VI can be conveyed to the piece 1 e.g. by means of a roll 4, a press, a roller or some other such element. In the next phase, either the machinable piece 1, the chipping blades 3 or both are moved in relation to each other to provide a mutual feeding motion LI. The feeding motion can be one-directional or reciprocating. The shape of the feeding motion can also be linear or rotating or freely curved in their combination. If required, adjusting the length of the feeding motion can force the chips to remain fast at their one end on the machinable piece.

The chipping tool in accordance with Fig. 2 includes a body 2 in which are fastened several chipping blades 3 being at an oblique angle in relation to the body, one after the other at a distance from each other in the direction of the feeding motion LI. Typically, the number of chipping blades 3 can be 2-20 pieces or more. The mutual distance between the blades is typically 1-50 mm. The distance can be changed and it can also vary between different blades 3. The chipping depth of the blades is adjustable by transferring L2 or rotating L3 the position of the blades 3 in relation to the machinable piece. The shape of created chips can be adjusted by rotating L3 the blades 3.

In the work phase in accordance with Fig. 1, the body 2 is set in an oblique position in relation to the machinable piece 1, whereby the blades 3 extend at different points in relation to the machinable piece. In machining, the first blade cuts the first chip, the second blade below it the second chip etc. It is also possible to use a tool in which the blades are fastened to the body of the tool such that they extent at a different distance from the surface of the body obliquely downwards.

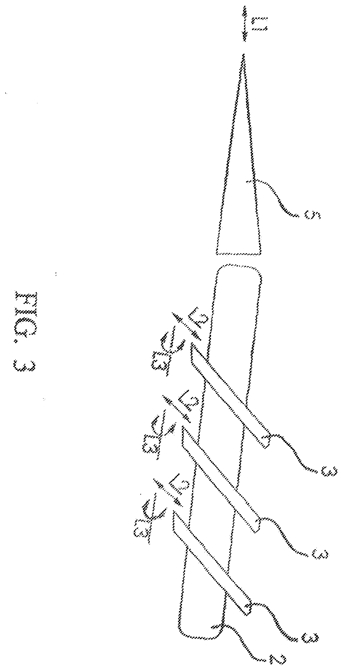

In the tool in accordance with Fig. 3, the chipping blades 3 are fastened into connection with a splitting blade 5. The chipping blades 3 are located one after the other after the tip of the splitting blade in the direction of the feeding motion. The body 2 of the chipping blades and the splitting blade 5 can be combined into one piece. There can be one series of chipping blades on one side of the splitting blade or several series on both sides of the splitting blade 5.

The chipping method according to the invention can be also utilised in other applications than in the manufacturing processes of firewood. This machining method enables increasing the area of any quite fixed piece manufactured of chippable material by leaving the machined chips fast at their one end on the machinable piece. Applications which can utilise such increase in the area are e.g. various types of heat exchange elements in heat exchangers, coolers or heaters. Also various types of reactors, catalysts and mixers can utilise the increase in the reaction area of the piece by the here-described chipping method. In addition to different wood species, the material of the chippable piece can be wood, plastic or ceramic composite, plastic, rubber, various metals, plant and foodstuff bulk or other chippable materials. The cross-sectional shape of the machinable piece can be rectangular, quadratic, laminar, tubular, circular, polygonal or free-shaped. The structure of the piece can be closed, hollow or cellular. The length of the piece can be typically at the shortest about 10 mm and at the longest a several hundreds of metres long seamless wire, band or other profile.

The chipping method and the chipping tool according to the invention can be utilised in chipping devices or machines designed and built especially for them. However, they can also be utilised e.g. in existing splitting and manufacturing machines of firewood as a further processing method of chopped firewood and as attachments of splitting blades.

The invention is not limited to the described advantageous embodiments, but it can vary within the scope of the claims.

## Claims

1. A chipping tool which includes a body (2) and chipping blades (3) fastened to it, of which chipping blades (3) there are several located one after the other in the direction of a feeding motion LI, wherein the chipping tool includes control elements for controlling the length of the mutual motion of the machinable piece (1) and the tool in order for the machinable chips to remain fast at their one end on the machinable piece (1), **characterized in that** the chipping tool comprises a splitting blade (5) attached into connection with the rest of the chipping tool, wherein the several chipping blades (3) are fastened one after the other in the direction of the feeding motion to the splitting blade (5) after its splitting tip.

2. A method for machining a piece by a multiple blade tool, in which method, the machinable piece (1) and the multiple blade tool are pressed against each other, the machinable piece or the tool or both of them are moved in relation to each other such that they make a linear, rotating or curved mutual feeding motion and several chips are machined from the piece (1) simultaneously, wherein the length of the mutual feeding motion of the machinable piece (1) and the tool is adjusted such that the machined chips remain fast at their one end on the machinable piece (1), **characterized in that** the multiple blade tool is a tool according to claim 1.

3. A method according to claim 2, **characterized by** controlling the mutual position of blades (3) of the tool (2) for adjusting the mutual distance of the chips.

## Patentansprüche

1. Zerspanungswerkzeug, das einen Körper (2) und Zerspanklingen (3), die daran befestigt sind, beinhaltet, wobei von den Zerspanklingen (3) mehrere eine hinter der anderen in der Richtung einer Zufuhrbewegung LI angeordnet sind, wobei das Zerspanungswerkzeug Steuerelemente zum Steuern der Länge der wechselseitigen Bewegung des zerspanbaren Stücks (1) und des Werkzeugs, damit die zerspanbaren Späne an ihrem einem Ende fest am zerspanbaren Stück (1) verbleiben, beinhaltet, **dadurch gekennzeichnet, dass** das Zerspanungswerkzeug eine Spaltklinge (5) umfasst, die in Verbindung mit dem Rest des Zerspanungswerkzeugs angebracht ist, wobei die mehreren Zerspanklingen (3) eine nach der anderen in der Richtung der Zufuhrbewegung der Spaltklinge (5) hinter ihrer Spaltspitze befestigt sind.

2. Verfahren zum Zerspanen eines Stücks durch ein Werkzeug mit mehreren Klingen, wobei das zerspanbare Stück (1) und das Werkzeug mit mehreren Klingen bei dem Verfahren gegeneinander gepresst werden, das zerspanbare Stück oder das Werkzeug oder beide mit Bezug aufeinander derart bewegt werden, dass sie eine wechselseitige lineare, rotierende oder gekrümmte Zufuhrbewegung durchführen und mehrere Späne gleichzeitig vom Stück (1) abgespant werden, wobei die Länge der wechselseitigen Zufuhrbewegung des zerspanbaren Stücks (1) und des Werkzeugs derart angepasst wird, dass die abgespanten Späne an ihrem einen Ende fest am zerspanbaren Stück (1) verbleiben, **dadurch gekennzeichnet, dass** das Werkzeug mit mehreren Klingen ein Werkzeug nach Anspruch 1 ist.

3. Verfahren nach Anspruch 2, **gekennzeichnet durch** Steuern der wechselseitigen Position der Klingen (3) des Werkzeugs (2) zum Anpassen des wechselseitigen Abstands der Späne.

## Revendications

1. Outil d'enlèvement de copeaux qui comprend un corps (2) et des lames d'enlèvement de copeaux (3) fixées à ce dernier, parmi les lames d'enlèvement de copeaux (3), il y en a plusieurs positionnées l'une après l'autre dans la direction d'un mouvement d'alimentation LI, dans lequel l'outil d'enlèvement de copeaux comprend des éléments de contrôle pour contrôler la longueur du mouvement mutuel de la pièce usinable (1) et de l'outil afin que les copeaux usinables restent solidement fixés au niveau d'une de leur extrémité sur la pièce usinable (1), **caractérisé en ce que** l'outil d'enlèvement de copeaux comprend une lame de fendage (5) fixée en raccordement avec le reste de l'outil d'enlèvement de copeaux, dans lequel la pluralité de lames d'enlèvement de copeaux (3) sont fixées l'une après l'autre dans la direction du mouvement d'alimentation, à la lame de fendage (5) après sa pointe de fendage.

2. Procédé pour usiner une pièce par un outil à plusieurs lames, dans lequel procédé, la pièce usinable (1) et l'outil à plusieurs lames sont comprimés l'un contre l'autre, la pièce usinable ou l'outil ou les deux sont déplacés l'un par rapport à l'autre de sorte qu'ils réalisent un mouvement d'alimentation mutuel linéaire, rotatif ou incurvé et plusieurs copeaux sont usinés simultanément à partir de la pièce (1), dans lequel la longueur du mouvement d'alimentation mutuel de la pièce usinable (1) et de l'outil est ajustée de sorte que les copeaux usinés restent solidement fixés au niveau d'une de leur extrémité sur la pièce usinable (1), **caractérisé en ce que** l'outil à plusieurs lames est un outil selon la revendication 1.

3. Procédé selon la revendication 2, **caractérisé par** le contrôle de la position mutuelle des lames (3) de l'outil (2) pour ajuster la distance mutuelle des copeaux.
